# EUROPEAN PATENT APPLICATION

(11) **EP 3 199 756 A1**
(43) Date of publication of application: **02.08.2017**
(21) Application number: 16153208.0
(22) Date of filing: 28.01.2016
(51) Int. Cl.: F01D 5/08

(54) **GAS TURBINE ROTOR DISC, CORRESPONDING METHODS OF MANUFACTURING AND MODIFYING A ROTOR DISC**

(71) Applicant: Siemens Aktiengesellschaft, 80333 München (DE)
(72) Inventor: Batt, Stephen, Lincoln, LN4 2DZ (GB); Gopal, Thanasekaran, West Bridgford, Nottingham, NG2 7QA (GB)
(74) Representative: Maier, Daniel Oliver

(57) **Abstract**

A rotor disc (36) for a gas turbine (10) comprises:
- at least a root cavity (75) for coupling with a blade (38, 60) of the gas turbine,
- a disc cooling hole (70) for connecting the root cavity (75) with a source of a cooling gas.

The disc cooling hole (70) has a cross section (S) having a first major axis (W1) inclined with respect to a circumferential direction of the rotor disc (36) of a first inclination angle (α) comprised between 0 and 45 degrees. A first distance (D1) along the major axis (W1) of the cross section (S) is greater than a second distance (D2) along a second minor axis (W2) of the cross section (S), the major and minor axes (W1, W2) being mutually orthogonal.

Corresponding methods of manufacturing a rotor disc and modifying a rotor disc are also provided.

## Description

### Field of invention

The present invention relates to gas turbine discs. More in particular, the present invention relates to gas turbine discs provided with a cooling hole shaped for reducing stress concentration. The present invention further relates to methods of manufacturing or modifying a gas turbine disc for reducing stress concentration.

### Art Background

In a gas turbine engine, air is pressurized in a compressor and mixed with fuel in a combustor for generating hot combustion gases. The hot gases are then channelled towards a turbine which transforms the energy from the hot gases into work for powering the compressor and other devices which converts power, for example an upstream fan in a typical aircraft turbofan engine application, or a generator in power generation application.

The turbine stages include stationary turbine nozzles having a row of vanes which channel the combustion gases into a corresponding row of rotor blades extending radially outwardly from a supporting rotor disc. The vanes and blades may have corresponding hollow aerofoils. Aerofoils may be designed and manufactured hollow in order to save weight, to change its eigenfrequency or to include a cooling circuit therein. In the latter case, the cooling gas which circulates inside the cooling circuit or circuits is typically bleed air from the compressor discharge.

In the case of the blades, for connecting the hollow aerofoils to a source of cooling gas, a plurality of disc cooling holes have to be provided in the rotor disc, each cooling hole being arranged for communicating with a respective hole or cooling passage provided in the root of a respective blade. Each cooling hole therefore comprises a breakout in a respective root cavity of the disc, the root cavity being provided in the rotor disc for coupling with the root of a respective blade.

The concentration of stress at the breakout and along the length of the disc cooling hole represents a problem, which may cause fatigue damages or failures and therefore limit the life of the turbine disc.

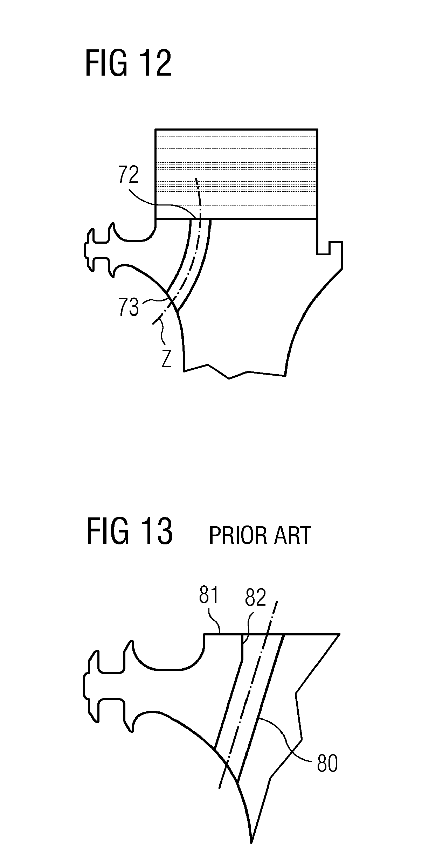

One possible known-in-the-art solution for relieving such concentration of stress is to remove material from the acute corner at the intersection between the disc cooling hole and the disc root cavity. As shown in the attached disc sectional view of Fig. 13, this may be achieved by tapering a corner 82 at the intersection between a disc cooling hole 80 and a disc root cavity 81. The main drawbacks of this solution are:
- the corner tapering is an additional operation which incurs additional cost;
- the benefits because the material cut-out at the tapered corner 82 makes the cooling hole breakout at the root cavity bigger, so that also the disruption to the circumferential strength of the rotor disc becomes greater.

It is therefore still desirable to provide a new design for the disc cooling holes provided in the turbine rotor disc, in order to reduce the concentration of stress in the disc and the disturbances to the disc circumferential strength induced by the presence of the cooling holes.

### Summary of the Invention

In order to achieve the object defined above, a rotor disc for a gas turbine, a manufacturing method and a modifying method are provided in accordance to the independent claims. The dependent claims describe advantageous developments and modifications of the invention.

According to a first aspect of the present invention, a rotor disc for a gas turbine includes:
- at least a root cavity for coupling with a blade of the gas turbine,
- a disc cooling hole for connecting the root cavity with a source of a cooling gas,
wherein, at least along a first depth portion of the disc cooling hole communicating with the root cavity, the disc cooling hole is such that:
- the cross section of the disc cooling hole has a first major axis inclined with respect to a circumferential direction of the rotor disc of a first inclination angle comprised between 0 and 45 degrees,
- a first distance along the major axis of the cross section between a first and a second point on the edge of the cross section is greater than a second distance along a second minor axis of the cross section between a third and a fourth point on the edge of the cross section, the major and minor axes being mutually orthogonal.

According to a second aspect of the present invention, a method of manufacturing a rotor disc for a gas turbine is provided. The rotor disc includes at least a root cavity for coupling with a blade of the gas turbine. The method includes the step of providing a disc cooling hole for connecting the root cavity with a source of a cooling gas,
wherein, at least along a first depth portion of the disc cooling hole communicating with the root cavity, disc cooling hole is such that:
- the cross section of the disc cooling hole has a first major axis inclined with respect to a circumferential direction of the rotor disc of an inclination angle comprised between 0 and 45 degrees,
- a first distance along the major axis of the cross section between a first and a second point on the edge of the cross section is greater than a second distance along a second minor axis of the cross section between a third and a fourth point on the edge of the cross section, the major and minor axes being mutually orthogonal.

According to a third aspect of the present invention, a method of modifying a rotor disc for a gas turbine is provided. The rotor disc includes:
- at least a root cavity for coupling with a blade of the gas turbine,
- a first circular disc cooling hole for connecting the root cavity with a source of a cooling gas.

The modifying method comprises the step of providing, at least along a first depth portion of the first disc cooling hole communicating with the root cavity, a second disc cooling hole for connecting the root cavity with a source of a cooling gas, the second disc cooling hole being such that:
- the first circular disc cooling hole and the second disc cooling hole are coaxial along a common hole axis,
- the cross section of the disc cooling hole has a first major axis inclined with respect to a circumferential direction of the rotor disc of an inclination angle comprised between 0 and 45 degrees,
- a first distance along the major axis of the cross section between a first and a second point on the edge of the cross section is greater than a second distance along a second minor axis of the cross section between a third and a fourth point on the edge of the cross section, the major and minor axes being mutually orthogonal.

The choice of an elongated section for the disc cooling hole, at least along a first depth portion communicating with the root cavity, permits to orient the cooling hole in order to relieve the stress concentration at the cooling hole, thus achieving a longer turbine disc life, with respect to the existing rotor discs. In particular, according to embodiments of the present invention, the section of the disc cooling hole is oriented in such a way that the second distance of the elongated section corresponds to a maximum value of the stress concentration along the circumferential direction of the rotor disc.

According to an exemplary embodiment of the present invention, the above is achieved through an elliptical cross section of the disc cooling hole.

According to another exemplary embodiment of the present invention, the above is achieved through a cross section of the disc cooling hole which is lobed-shape, having two lobes at the opposite sides of the second minor axis.

According to other exemplary embodiments of the present invention, the depth of the first depth portion, measured orthogonally to an axis of rotation of the rotor disc is 1% to 10% of the distance between the axis of rotation and an opening of the disc cooling hole at the root cavity. Advantageously, the depth of the first depth portion of the disc cooling hole is chosen of a convenient length in order to achieve the purposes of the present invention.

According to an exemplary embodiment of the present invention, when the disc cooling hole above described is added to an existing rotor disc for a gas turbine, the modifying method further includes the step of smoothing the edges at the intersections between the first circular disc cooling hole and the second disc cooling hole. Advantageously, this avoids further stress concentrations, with consequent weakening of the rotor disc.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The above mentioned attributes and other features and advantages of this invention and the manner of attaining them will become more apparent and the invention itself will be better understood by reference to the following description of embodiments of the invention taken in conjunction with the accompanying drawings, wherein:
FIG. 1 shows part of a turbine engine in a sectional view and in which the present inventive aerofoil is incorporated,
FIG. 2 shows a radial sectional view of a rotor disc according to the present invention,
FIG. 3 shows a partial top view of the rotor disc of fig. 2,
FIG. 4 shows a top view of a detail of the rotor disc of fig. 2,
FIG. 5 shows a partial top view of another embodiment of a rotor disc according to the present invention,
FIG. 6 shows a top view of a detail of the rotor disc of fig. 5,
FIG. 7 shows a possible variant of the detail of fig. 4, which is obtained with a method of modifying a rotor disc according to the present invention,
FIG. 8 shows a possible variant of the detail of fig. 6, which is obtained with a method of modifying a rotor disc according to the present invention,
FIG. 9 shows a magnified view of a detail of fig. 2,
FIGS. 10 to 12 show three possible alternative embodiments of the detail of fig. 9,
FIG. 13 shows a partial radial sectional view of a rotor disc according to the state of the art.

### Detailed Description

Hereinafter, above-mentioned and other features of the present invention are described in details. Various embodiments are described with reference to the drawings, wherein the same reference numerals are used to refer to the same elements throughout. The illustrated embodiments are intended to explain, and not to limit the invention.

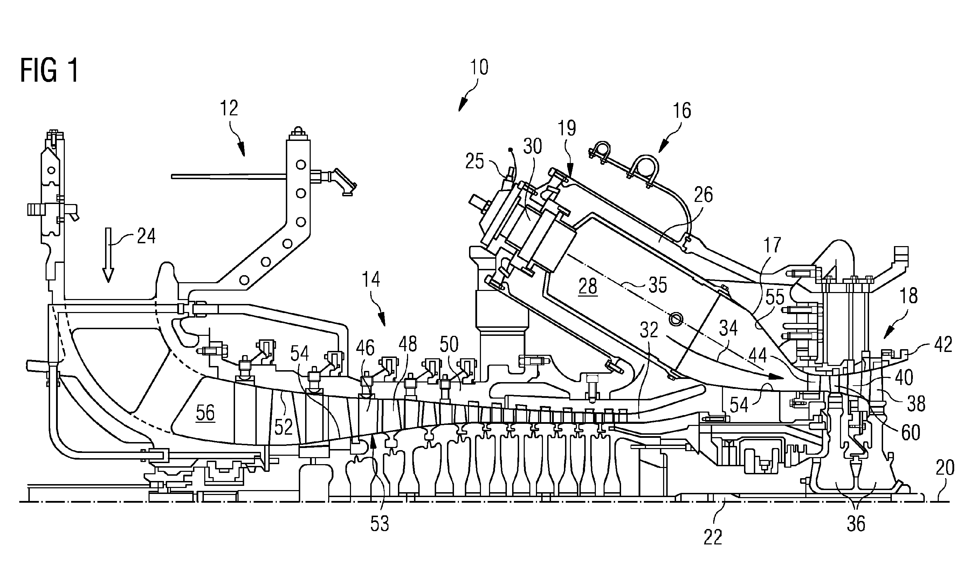

FIG. 1 shows an example of a gas turbine engine 10 in a sectional view. The gas turbine engine 10 comprises, in flow series, an inlet 12, a compressor section 14, a combustor section 16 and a turbine section 18 which are generally arranged in flow series and generally about and in the direction of a longitudinal or rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 14.

In operation of the gas turbine engine 10, air 24, which is taken in through the air inlet 12 is compressed by the compressor section 14 and delivered to the combustion section or burner section 16. The burner section 16 comprises a burner plenum 26, one or more combustion chambers 28 and at least one burner 30 fixed to each combustion chamber 28. The combustion chambers 28 and the burners 30 are located inside the burner plenum 26. The compressed air passing through the compressor 14 enters a diffuser 32 and is discharged from the diffuser 32 into the burner plenum 26 from where a portion of the air enters the burner 30 and is mixed with a gaseous or liquid fuel. The air/fuel mixture is then burned and the combustion gas 34 or working gas from the combustion is channelled through the combustion chamber 28 to the turbine section 18 via a transition duct 17.

This exemplary gas turbine engine 10 has a cannular combustor section arrangement 16, which is constituted by an annular array of combustor cans 19 each having the burner 30 and the combustion chamber 28, the transition duct 17 has a generally circular inlet that interfaces with the combustor chamber 28 and an outlet in the form of an annular segment. An annular array of transition duct outlets form an annulus for channelling the combustion gases to the turbine 18.

The turbine section 18 comprises a number of rotor discs 36 attached to the shaft 22. In the present example, two discs 36 are provided, each carrying an annular array of turbine blades 38, 60 (a first stage of turbine blades 60 and a second stage of turbine blades 38). However, the number of blade carrying discs could be different, i.e. only one disc 36 or more than two discs 36. In addition, guiding vanes 40, 44 (a first stage of guiding vanes 44 and a second stage of guiding vanes 40), which are fixed to a stator 42 of the gas turbine engine 10, are disposed between the stages of annular arrays of turbine blades 38, 60. Between the exit of the combustion chamber 28 and the leading turbine blades 60 inlet guiding vanes 40, 44 are provided and turn the flow of working gas onto the turbine blades 38, 60.

The combustion gas from the combustion chamber 28 enters the turbine section 18 and drives the turbine blades 38 which in turn rotate the shaft 22. The guiding vanes 40, 44 serve to optimise the angle of the combustion or working gas on the turbine blades 38.

The turbine section 18 drives the compressor section 14. The compressor section 14 comprises an axial series of vane stages 46 and rotor blade stages 48. The rotor blade stages 48 comprise a rotor disc supporting an annular array of blades. The compressor section 14 also comprises a casing 50 that surrounds the rotor stages and supports the vane stages 48. The guide vane stages include an annular array of radially extending vanes that are mounted to the casing 50. The vanes are provided to present gas flow at an optimal angle for the blades at a given engine operational point. Some of the guide vane stages have variable vanes, where the angle of the vanes, about their own longitudinal axis, can be adjusted for angle according to air flow characteristics that can occur at different engine operations conditions.

The casing 50 defines a radially outer surface 52 of the passage 56 of the compressor 14. A radially inner surface 54 of the passage 56 is at least partly defined by a rotor drum 53 of the rotor which is partly defined by the annular array of blades 48.

The present invention is described with reference to the above exemplary turbine engine having a single shaft or spool connecting a single, multi-stage compressor and a single, one or more stage turbine. However, it should be appreciated that the present invention is equally applicable to two or three shaft engines and which can be used for industrial, aero or marine applications.

The terms upstream and downstream refer to the flow direction of the airflow and/or working gas flow through the engine unless otherwise stated. The terms forward and rearward refer to the general flow of gas through the engine. The terms axial, radial and circumferential are made with reference to the rotational axis 20 of the engine.

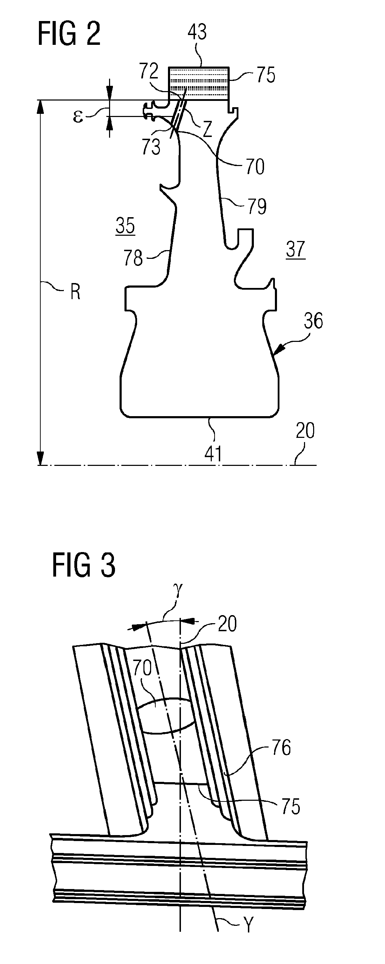

Embodiments of the rotor disc 36 according to the present invention are shown in Figs. 2 to 12.

With reference to Figs. 2 to 4, the rotor disc 36 extends radially between an inner circumferential surface 41, which in operation is fixedly connected to the shaft 22, and an outer circumferential surface 43, which in operation is fixedly connected to one plurality of blades 60, 38.

Along the outer circumferential surface 43, the rotor disc 36 comprises a plurality of root cavities 75, each for receiving a root portion of a blade 38, 60. Each root cavity 75 includes a plurality of serrations 76 for engaging correspondent mating serrations in the blades 60, 38.

The rotor disc 36 extends axially between an upstream face 78 and an opposite downstream face 79, both extending between the inner circumferential surface 41 and the outer circumferential surface 43. The upstream face 78 is, in operation, i.e. when the rotor disc 36 is attached to the shaft 22, the boundary of an upstream rotor cavity 35. The downstream face 79 is, in operation, i.e. when the rotor disc 36 is attached to the shaft 22, the boundary of a downstream rotor cavity 37. In both the upstream rotor cavity 35 and the downstream rotor cavity 37, a cooling gas (for example compressed bleed air from the discharge of the compressor section 14) is circulated. Each root cavity 75 extends from one to the other of the upstream face 78 and the downstream face 79, along a root axis Y, which is inclined of an angle γ comprised between 0 and 60 degrees with respect to the rotation axis 20.

For each of the root cavities 75, the rotor disc 36 further comprises a disc cooling hole 70 for connecting the root cavity 75 with the upstream face 78. Through the disc cooling hole 70, the cooling gas flowing in the upstream disc cavity 35 is channelled to the root cavity 75. The disc cooling hole 70 comprises a first opening 72 at the respective root cavity 75 and second opening 73 at the upstream face 78 of the rotor disc 36.

According to other embodiments of the present invention, another source of cooling gas, different from the upstream rotor cavity 35, may be used.

The disc cooling hole 70 is such that, at the first opening 72 the cross section S of the disc cooling hole 70 has an elongated shape along a first major axis W1, which is inclined with respect to a circumferential (or hoop) direction X of the rotor disc 36. The first major axis W1 is inclined with respect to the circumferential direction X of a first hole inclination angle α comprised between 0 and 45 degrees. According to some embodiment of the present invention, more in particular, the first inclination angle α is comprised between 0 and 20 degrees.

The cross section S of the disc cooling hole 70 has also a second minor axis W2, orthogonal to the first major axis W1. In the embodiment of **Figs. 2** to **4** the cross section S is elliptical, with W1 and W2 as, respectively, elliptical major axis and elliptical minor axis.

In general, according to the present invention, the shape of the cross section S of the disc cooling hole 70 is such that a first distance D1 along the major axis W1 between a first point P1 and a second point P2 on the edge of the cross section S is greater than a second distance D2 along the second minor axis W2 between a third point P3 and a fourth point P4 on the edge of the cross section S.

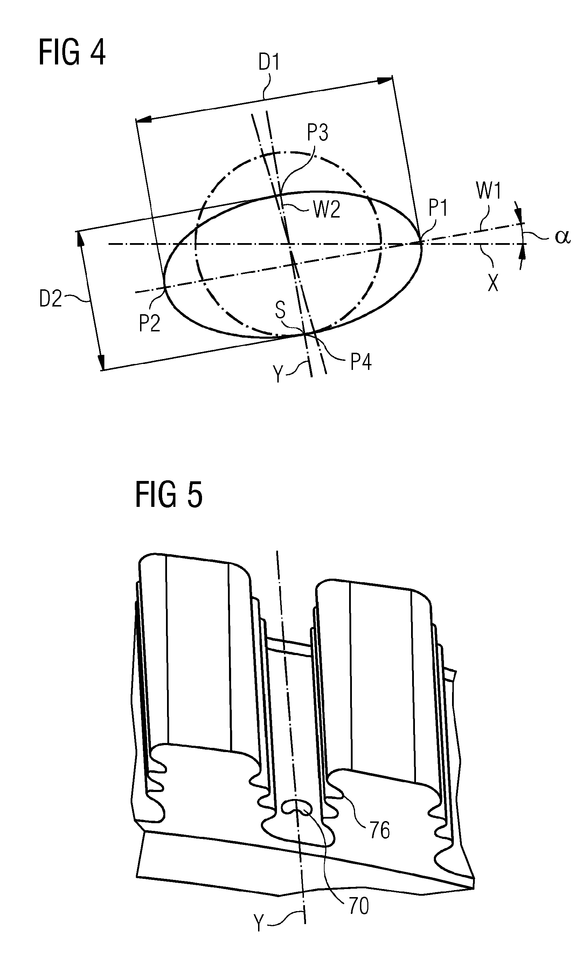

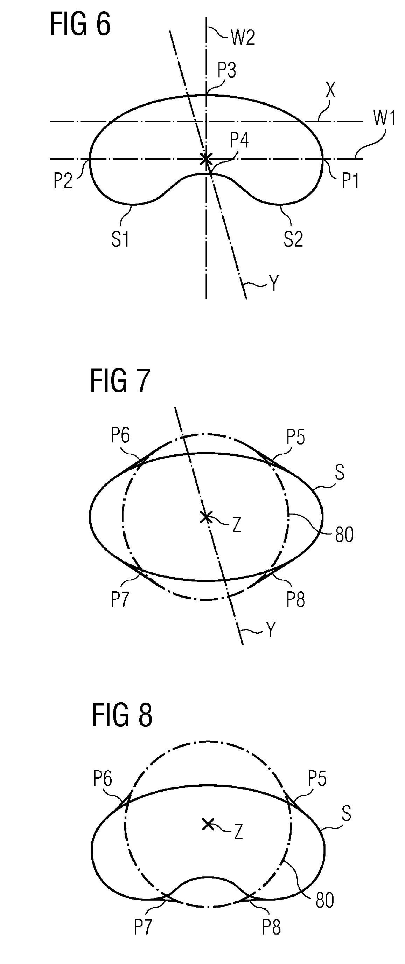

In particular, the second distance D2 and the minor axis W2 correspond to a position in the root cavity 75 where the stress concentration along the circumferential direction X of the rotor disc 36 reaches a maximum value. More in particular, the maximum stress concentration along the circumferential direction X is reached in an area around the third point P3 or the fourth point P4 of the cross section S. For example, in the alternative embodiment of **Figs. 5** and **6****,** the cross section S is lobed-shape, having two lobes S1, S2, left and right, at the opposite sides of the second minor axis W2.

According to other embodiments, other shapes may be used for the cross section S, provided that they are elongated along a major axis W1.

In general, according to the present invention, the cross section S extends along a hole longitudinal axis Z from the root cavity 75 towards the upstream face 78, along a first depth portion 71 of the disc cooling hole 70 communicating with the root cavity 75. Along a second depth portion 72 of the disc cooling hole 70 communicating with the upstream face 78 and including the second opening 73, the disc cooling hole 70 has the cross section S of the first depth portion 71 or a different one, for example a circular section.

The depth ε of the first depth portion 71, measured orthogonally to the axis of rotation 20 is 1% to 10% of the distance R between the axis of rotation 20 and the first opening 72 of the disc cooling hole 70.

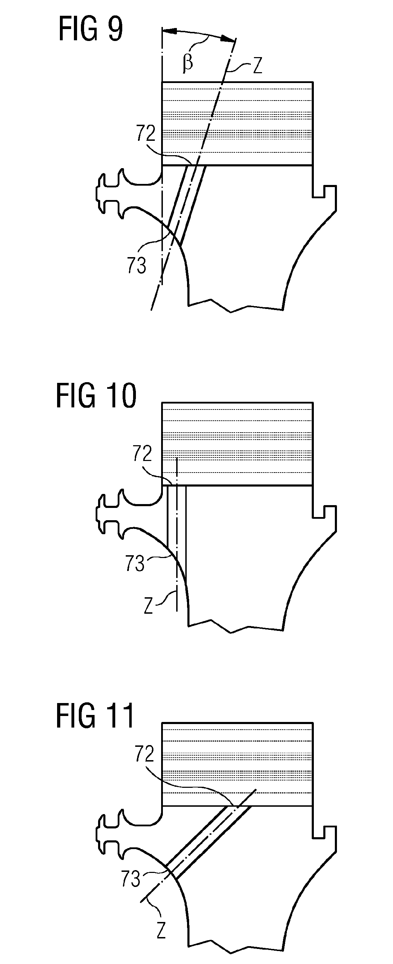

With reference to **Figs. 9** to **11****,** the hole longitudinal axis Z is rectilinear and inclined with respect to a radial direction of the rotor disc 36 of a second inclination angle β comprised between 0 and 45 degrees. In particular, second inclination angle β has a value of about 20 degrees in fig. 9, 0 degrees in fig. 10 and 45 degrees in fig. 11. With reference to **Fig. 12****,** the hole longitudinal axis Z is curved. According to the present invention, the disc cooling hole 70 above described may be manufactured on a new rotor disc 36, by milling, Electrical Discharge Machining (EDM) or Electrochemical Machining (ECM).

The present invention may also be used to modify an existing rotor disc 36 of a gas turbine comprising an existing first circular disc cooling hole 80 for connecting the root cavity 75 with the upstream face 78. In this case, the method of modifying an existing rotor disc 36 comprises the step of providing, at least along a first depth portion 70 of the first disc cooling hole 80 communicating with the root cavity 75, the second disc cooling hole 70, having the characteristics above described, according to the present invention.

The above step produces four sharp edges P5, P6, P7, P8, at the intersection between the first disc cooling hole 80 and the second disc cooling hole 70. To avoid the stress concentration inconveniences which may derive by such sharp edges, the method of modifying an existing rotor disc 36 comprises the further step of smoothing the edges at the intersections P5, P6, P7, P8 between the first circular disc cooling hole 80 and the second disc cooling hole 70.

Also in when modifying an existing rotor disc 36, the second disc cooling hole 70 may be manufactured by milling, Electrical Discharge Machining (EDM) or Electrochemical Machining (ECM).

## Claims

1. A rotor disc (36) for a gas turbine (10) including:
- at least a root cavity (75) for coupling with a blade (38, 60) of the gas turbine,
- a disc cooling hole (70) for connecting the root cavity (75) with a source of a cooling gas,
wherein, at least along a first depth portion (71) of the disc cooling hole (70) communicating with the root cavity (75), the disc cooling hole (70) is such that:
- the cross section (S) of the disc cooling hole (70) has a first major axis (W1) inclined with respect to a circumferential direction of the rotor disc (36) of a first inclination angle (α) comprised between 0 and 45 degrees,
- a first distance (D1) along the major axis (W1) of the cross section (S) between a first and a second point (P1, P2) on the edge of the cross section (S) is greater than a second distance (D2) along a second minor axis (W2) of the cross section (S) between a third and a fourth point (P3, P4) on the edge of the cross section (S), the major and minor axes (W1, W2) being mutually orthogonal.

2. The rotor disc (36) of claim 1, wherein the second distance (D2) corresponds to a maximum value of the stress concentration along the circumferential direction of the rotor disc (36).

3. The rotor disc (36) of claim 1 or 2, wherein the cross section (S) is elliptical.

4. The rotor disc (36) of claim 1 or 2, wherein the cross section (S) is lobed-shape, having two lobes (S1, S2) at the opposite sides of the second minor axis (W2).

5. The rotor disc (36) of any of the preceding claims,
wherein the first inclination angle (α) is comprised between 0 and 20 degrees.

6. The rotor disc (36) of any of the preceding claims, wherein the depth (ε) of the first depth portion (71), measured orthogonally to an axis of rotation (20) of the rotor disc (36) is 1% to 10% of the distance ® between the axis of rotation (20) and an opening (72) of the disc cooling hole (70) at the root cavity (75).

7. The rotor disc (36) of any of the preceding claims, wherein the disc cooling hole (70) is provided along an hole longitudinal axis (Z) which is inclined with respect to a radial direction of the rotor disc (36) of a second inclination angle (β) comprised between 0 and 45 degrees.

8. A method of manufacturing a rotor disc (36) for a gas turbine (10) including at least a root cavity (75) for coupling with a blade (38, 60) of the gas turbine, the method including the step of providing a disc cooling hole (70) for connecting the root cavity (75) with a source of a cooling gas,
wherein, at least along a first depth portion (71) of the disc cooling hole (70) communicating with the root cavity (75), disc cooling hole (70) is such that:
- the cross section (S) of the disc cooling hole (70) has a first major axis (W1) inclined with respect to a circumferential direction of the rotor disc (36) of an inclination angle (α) comprised between 0 and 45 degrees,
- a first distance (D1) along the major axis (W1) of the cross section (S) between a first and a second point (P1, P2) on the edge of the cross section (S) is greater than a second distance (D2) along a second minor axis (W2) of the cross section (S) between a third and a fourth point (P3, P4) on the edge of the cross section (S), the major and minor axes (W1, W2) being mutually orthogonal.

9. A method of modifying a rotor disc (36) for a gas turbine (10), the rotor disc (36) including:
- at least a root cavity (75) for coupling with a blade (38, 60) of the gas turbine,
- a first circular disc cooling hole (80) for connecting the root cavity (75) with a source of a cooling gas,
wherein the method comprises the step of providing, at least along a first depth portion (71) of the first disc cooling hole (80) communicating with the root cavity (75), a second disc cooling hole (70) for connecting the root cavity (75) with a source of a cooling gas, the second disc cooling hole (70) being such that:
- the first circular disc cooling hole (80) and the second disc cooling hole (70) are coaxial along a common hole axis (Z),
- the cross section (S) of the disc cooling hole (70) has a first major axis (W1) inclined with respect to a circumferential direction of the rotor disc (36) of an inclination angle (α) comprised between 0 and 45 degrees,
- a first distance (D1) along the major axis (W1) of the cross section (S) between a first and a second point (P1, P2) on the edge of the cross section (S) is greater than a second distance (D2) along a second minor axis (W2) of the cross section (S) between a third and a fourth point (P3, P4) on the edge of the cross section (S), the major and minor axes (W1, W2) being mutually orthogonal.

10. The method of claim 8, further including the step of smoothing the edges at the intersections (P5, P6, P7, P8) between the first circular disc cooling hole (80) and the second disc cooling hole (70).
